(19) Europäisches Patentamt

European Patent Office

Office européen des brevets

(11) **EP 0 642 939 B1**

(12) **EUROPÄISCHE PATENTSCHRIFT**

(45) Veröffentlichungstag und Bekanntmachung des Hinweises auf die Patenterteilung:
**01.05.1996 Patentblatt 1996/18**

(51) Int. Cl.$^6$: **B60G 15/07**, B60G 11/14, B60G 3/26

(21) Anmeldenummer: **94110354.1**

(22) Anmeldetag: **04.07.1994**

(54) **Fahrzeug-Radaufhängung in Dämpferbeinbauart**

Strut type vehicle wheel suspension

Suspension de roue pour véhicule à jambe de suspension

(84) Benannte Vertragsstaaten:
**DE ES FR GB IT**

(30) Priorität: **15.09.1993 DE 4331365**

(43) Veröffentlichungstag der Anmeldung:
**15.03.1995 Patentblatt 1995/11**

(73) Patentinhaber: **Bayerische Motoren Werke Aktiengesellschaft**
**D-80788 München (DE)**

(72) Erfinder: **Matschinsky, Wolfgang, Dr.**
**D-80807 München (DE)**

(56) Entgegenhaltungen:
**EP-A- 0 199 189**   **EP-A- 0 202 449**
**DE-A- 1 580 480**   **DE-A- 3 012 873**
**DE-A- 3 337 255**   **US-A- 4 779 893**

• **PATENT ABSTRACTS OF JAPAN vol. 12, no. 241 (M-716) (3088) 8. Juli 1988 & JP-A-63 031 808 (MAZDA) 10. Februar 1988**

## Beschreibung

Die Erfindung bezieht sich auf eine Fahrzeug-Radaufhängung in Dämpferbeinbauart nach dem Oberbegriff des Patentanspruches 1.

Eine bekannte derartige Radaufhängung (DE-A-33 37 255) hat eine Koppelstrebe, die etwa parallel zum unteren Querlenker verläuft und mit ihrem vom Federteller abgewandten Ende am Fahrzeugaufbau abgestützt ist. Auf diese Weise ist es möglich, während der Federungsbewegung größere Querkräfte und ein Ausbauchen der Feder zu verhindern, so daß die Federlänge insgesamt etwas kürzer gewählt werden kann. Eine Beeinflussung der über die Radaufstandskraft auf das Dämpferbein ausgeübten Biegemomente ist mit der vorbekannten Radaufhängung nicht möglich.

Es sind weiterhin Radaufhängungen bekannt, die gegenüber den sogenannten Federbein-Radaufhängungen ebenfalls eine geringere Bauhöhe erlauben, weil die Feder, beispielsweise eine Schraubenfeder, nicht mehr oberhalb des Rades angeordnet werden muß. Die Feder stützt sich bei Dämpferbein-Radaufhängungen auf einem unteren Querlenker ab (DE-A-30 12 873). Die Radlast wird dabei über das radseitige Traggelenk des Querlenkers übertragen. Will man dabei Biegemomente auf das Dämpferbein, also den Stoßdämpfer, die sich als Querkraft an der Kolbenstange und am Kolben auswirken, vermeiden, so gelingt dies nur dann, wenn sich das Traggelenk über dem Radaufstandspunkt befindet. Dies erfordert aber eine Verschiebung der Bremsscheibe zur Fahrzeugaußenseite hin. Die Bremsscheibe gerät dann unter das Felgentiefbett und kann nur in einem kleineren Durchmesser ausgeführt werden (DE-A-28 43 697).

Bei den Radaufhängungen der vorgenannten Bauart macht das untere Federende die Winkelausschläge des Querlenkers beim Ein- und Ausfedern mit. Die Feder wird also beim Ein- und Ausfedern gekrümmt, was besonders im ausgefederten Zustand wegen der geringen Restfederkraft zum Abkippen aus dem Federteller führen kann. Um dies zu vermeiden, werden die Schraubenfedern in solchen Fällen häufig lang und schlank ausgeführt und sind dann um so mehr knickgefährdet.

Der Erfindung liegt die Aufgabe zugrunde, bei einer Radaufhängung der vorausgesetzten Bauart einerseits die aus der Radlast resultierenden Querkräfte an der Kolbenstange auszugleichen und andererseits Biegewinkel an der Feder weitgehend zu vermeiden.

Diese Aufgabe wird erfindungsgemäß bei einer Fahrzeug-Radaufhängung nach dem Oberbegriff des Patentanspruches 1 durch die im Kennzeichen des Patentanspruches 1 angegebenen Maßnahmen gelöst.

Durch den seitlichen Versatz der Wirkungslinie der Feder gegenüber der Drehachse des Federtellers am Querlenker - zweckmäßig zur Fahrzeugaußenseite hin - wird gezielt ein Kippmoment erzeugt, das sich mit Hilfe der querverlaufenden Koppelstrebe dazu nutzen läßt, auf den Radträger bzw. das mit diesem fest verbundene Dämpferbein ein Gegenmoment auszuüben, das bei richtiger Wahl der Hebelarme und Abstände dem aus der Radlast herrührenden Biegemoment des Dämpferbeins entgegenwirkt. Die Kolbenstange des Stoßdämpfers wird kaum mehr auf Biegung beansprucht, was nicht nur den Verschleiß in der Kolbenstangenführung und am Kolben, sondern auch die dort auftretenden Klemmkräfte reduziert und damit zu einem besseren Ansprechen der Federung führt.

Über die Koppelstrebe läßt sich der gegenüber dem Querlenker schwenkbare Federteller während der Schwenkbewegung des Querlenkers so führen, daß Biegewinkel an der Feder weitgehend ausgeschaltet sind. Die Feder kann deswegen im Durchmesser vergrößert und in der Windungszahl bzw. Bauhöhe verringert werden, so daß sie weniger stark knickgefährdet ist.

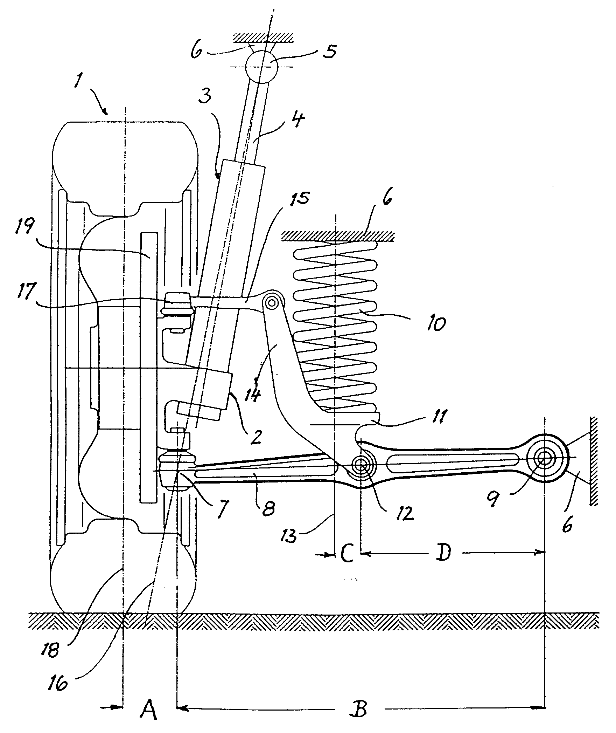

Die Erfindung ist im folgenden anhand eines in der Zeichnung dargestellten Ausführungsbeispiels näher erläutert. Die Zeichnung zeigt eine Ansicht der neuen Radaufhängung in Fahrzeuglängsrichtung gesehen.

Die dargestellte Radaufhängung in Dämpferbeinbauart umfaßt einen das Rad 1 lagernden Radträger 2, der fest mit dem unteren Ende eines Teleskop-Stoßdämpfers 3 verbunden ist. Die nach oben gerichtete Kolbenstange 4 ist über ein Gelenk 5 am Fahrzeugaufbau 6 abgestützt. Ein am unteren Bereich des Radträgers 2 über ein Kugelgelenk 7 angreifender Querlenker 8 ist mit seinem inneren, aufbauseitigen Lenkerabschnitt um eine zumindest annähernd längsverlaufende Achse 9 schwenkbar am Fahrzeugaufbau 6 angelenkt. Der Fahrzeugaufbau 6 stützt sich über eine Tragfeder 10 und einen Federteller 11 an dem Querlenker 8 ab. Die Verbindung mit dem Fahrzeugaufbau könnte auch mittelbar unter Zwischenschaltung eines nicht dargestellten Vorderachsträgers oder eines Fahrschemels erfolgen.

Der Federteller 11 ist um eine Drehachse 12 schwenkbar mit dem Querlenker 8 verbunden, die annähernd in Fahrzeuglängsrichtung verläuft und zur Wirkungslinie 13 der Tragfeder 10 seitlich, also in Fahrzeugquerrichtung, versetzt ist. Der Federteller 11 weist einen bei der dargestellten Ausführungsform nach oben gerichteten Arm 14 auf, über den der Federteller 11 gelenkig mit einem Ende einer Koppelstrebe 15 verbunden ist, die in vertikalem Abstand zum Querlenker 8 und etwa in Fahrzeugquerrichtung verläuft und mit ihrem anderen Ende gelenkig am Radträger 2 angreift. Die Koppelstrebe 15 stützt so den schwenkbaren Federteller in Querrichtung ab und führt den Federteller bei der Ein- und Ausfederbewegung der Radaufhängung.

Bei dem dargestellten Ausführungsbeispiel ist die Drehachse 12 des Federtellers 11 gegenüber der Wirkungslinie 13 der Tragfeder 10 zur Fahrzeugmitte hin versetzt und die Koppelstrebe 15 verläuft oberhalb des Querlenkers 8. Es wäre auch denkbar, die Drehachse 12 des Federtellers 11 gegenüber der Wirkungslinie 13 der Tragfeder 10 nach außen zu versetzen und die Koppelstrebe 15 unterhalb des Querlenkers 8 am Radträger 2 angreifen zu lassen. Ebenso könnte anstelle der dargestellten Schraubenfeder auch ein anderes Federelement, etwa ein pneumatisches Federelement oder ein hydropneumatisch wirkendes Element verwendet werden.

Auch müssen die Drehachse 12 des Federtellers 11 und auch die Achse 9 des Querlenkers 8 zu dessen aufbauseitiger Anlenkung nicht exakt in Fahrzeuglängsrichtung verlaufen, desgleichen auch nicht die Koppelstrebe 15 exakt in Fahrzeugquerrichtung.

Die neue Radaufhängung ist für ein lenkbares Rad beschrieben. Der Radträger 2 und damit das Rad 1 sind hierzu über eine nicht dargestellte Spurstange und einen Spurstangenhebel um eine Lenkdrehachse 16 bzw. Spreizachse drehbar, die durch das Gelenk 5 zur Abstützung des Teleskop-Stoßdämpfers 3 und durch das äußere Gelenk 7 des Querlenkers 8 verläuft. Zweckmäßig ist dabei das äußere Gelenk 17 der Koppelstrebe 15 in bezug auf die Lenkdrehachse 16 zur Fahrzeugaußenseite hin versetzt. Dadurch wird das Gelenk 17 beim Lenkvorgang etwas zur Fahrzeugmitte hin verschwenkt und kippt dabei den Federteller 11 etwas um die Drehachse 12 zur Fahrzeugmitte hin. Die Folge ist ein geringfügiges Anheben des Fahrzeugaufbaus 6 über die Tragfeder 10. Dies erlaubt eine vorteilhafte Beeinflussung der sogenannten "Gewichtsrückstellung", die für den Geradeauslauf des Fahrzeugs und die Zentrierung der Lenkung in die Mittellage von wesentlicher Bedeutung ist.

Abweichend von dem dargestellten Ausführungsbeispiel kann der untere Querlenker auch in zwei weitgehend stabförmige Einzellenker aufgelöst werden, um eine sogenannte ideelle Lenkdrehachse zu erhalten. Der Federteller 11 ist dann auf einem dieser beiden Einzellenker - zweckmäßig auf dem weitgehend in Fahrzeugquerrichtung verlaufenden Einzellenker - ebenfalls um eine Drehachse 12 schwenkbar angeordnet. Anstelle der einfachen, stabförmigen Koppelstrebe 15 ist dann vorzugsweise ein kurzer Dreieckslenker vorgesehen, dessen äußeres Kugelgelenk am Radträger angreift und dessen ecksteifes Drehlager am Federteller 11 in einem entsprechenden Höhenabstand zur Drehachse 12 des Federtellers 11 vorgesehen wird. Auf diese Weise wird ein Kippen des den Federteller 11 abstützenden Querlenkers um seine Mittelachse vermieden. Die ideelle Lenkdrehachse einer solchen Radaufhängung wandert während des Lenkvorganges und allein daraus ergibt sich bereits eine Verbesserung der Gewichtsrückstellung. Deswegen kann der Versatz des äußeren Koppelstrebengelenkes 17 gegenüber der ideellen Lenkdrehachse dann im allgemeinen kleiner gewählt werden.

Der eben erwähnte kurze Dreieckslenker zwischen Radträger und Federteller kann auch durch zwei gegeneinander winkelig verlaufende einfache Lenkerstangen (z. B. mit Kugelgelenken) ersetzt werden, wobei der Abstand ihrer Anlenkpunkte am Federteller größer ist als am Radträger. Dies erlaubt eine weitere Beeinflussung der Bewegung des Federtellers beim Lenkvorgang.

Wie man in der Zeichnung erkennt, kann durch den großzügigeren Abstand A des äußeren Gelenkes 7 des unteren Querlenkers 8 von der Radmittelebene 18 auch die Bremsscheibe 19 weiter zur Fahrzeugmittenebene gerückt werden. Sie kommt dabei nicht mehr unmittelbar unter das Felgentiefbett zu liegen und kann deswegen großzügiger dimensioniert werden. Trotz dieses größeren Abstandes A können die aus der Radlast resultierenden Querkräfte an der Kolbenstange vollständig ausgeglichen werden. Ist mit C der seitliche Versatz der Wirkungslinie 13 der Tragfeder 10 gegenüber der Drehachse 12 des Federtellers 11 bezeichnet und mit D der Abstand der Drehachse 12 von der aufbauseitigen Achse 9 des Querlenkers 8 sowie mit B der Querabstand des äußeren Gelenkes 7 des Querlenkers 8 von dessen aufbauseitiger Anlenkung (Achse 9), so kann die Querkraft an der Kolbenstange 4 etwa dann voll kompensiert werden, wenn

$$A \cdot D = C \cdot B$$

gewählt wird.

Die Koppelstrebe 15 muß nicht, wie dargestellt, mit ihrem äußeren Ende am Radträger 2 angreifen, sie könnte auch direkt am Teleskop-Stoßdämpfer 3 angelenkt sein. Die bei vorbekannten Radaufhängungen der vorausgesetzten Bauart in Kauf zu nehmende Querkraft an der Kolbenstange 4 und die daraus resultierenden Klemmkräfte und das schlechtere Ansprechen der Federung sind mit der dargestellten Radaufhängung vermieden. Weiterhin können von der Tragfeder 10 störende Biegewinkel weitgehend ferngehalten werden, so daß die Tragfeder 10 im Durchmesser vergrößert und in der Windungszahl bzw. Bauhöhe reduziert werden kann und damit weniger knickgefährdet ist. Die schon erwähnte Gewichtsrückstellung läßt sich unabhängig von der Lage der Lenkdrehachse 16 in weitem Bereich frei wählen und ist daher nicht mehr, wie bei konventionellen Radaufhängungen, mit einer entsprechend starken Änderung der Nachlaufstrecke über dem Lenkeinschlag mit den bekannten Nachteilen für den Lenkungsrücklauf gekoppelt.

**Patentansprüche**

1. Fahrzeug-Radaufhängung in Dämpferbeinbauart, mit einem das Rad (1) lagernden Radträger (2), der fest mit dem unteren Ende eines Teleskop-Stoßdämpfers (3) verbunden ist, dessen oberes Ende gelenkig am Fahrzeugaufbau (6) abgestützt ist, ferner mit einem Querlenker (8), der aufbauseitig um eine zumindest annähernd längsverlaufende Achse (9) schwenkbar und außen gelenkig mit dem Radträger (2) verbunden ist, wobei sich der Fahrzeugaufbau (6) am Querlenker (8) über eine Tragfeder (10) und einen Federteller (11) abstützt, der am Querlenker (8) um eine annähernd in Fahrzeuglängsrichtung verlaufende Drehachse (12) schwenkbar und durch eine in vertikalem Abstand zum Querlenker (8) und etwa in Fahrzeugquerrichtung verlaufende Koppelstrebe (15) abgestützt ist, dadurch gekennzeichnet, daß die besagte Drehachse (12) des Federtellers im Bezug auf die Wirkungslinie (13) der Tragfeder (10) am Querlenker seitlich versetzt ist und der Federteller (11) durch die Koppelstrebe (15) am Radträger (2) oder am Stoßdämpfer (3) abgestützt ist.

2. Radaufhangung nach Anspruch 1, dadurch gekennzeichnet, daß die Drehachse (12) des Federtellers (11) gegenüber der Wirkungslinie (13) der Tragfeder (10) zur Fahrzeugmitte hin versetzt ist und die Koppelstrebe (15) oberhalb des Querlenkers (8) verläuft.

3. Radaufhängung nach Anspruch 1, dadurch gekennzeichnet, daß die Drehachse (12) des Federtellers (11) gegenüber der Wirkungslinie (13) der Tragfeder (10) nach außen versetzt ist und die Koppelstrebe (15) unterhalb des Querlenkers (8) am Radträger (2) angreift.

4. Radaufhängung nach Anspruch 1 für ein lenkbares Rad, dadurch gekennzeichnet, daß das äußere Gelenk (17) der Koppelstrebe (15) in bezug auf die durch das äußere Querlenkergelenk (7) und das obere Stützgelenk (5) des Stoßdämpfers (3) verlaufende Lenkdrehachse (16) zur Fahrzeugaußenseite hin versetzt ist.

5. Radaufhängung nach Anspruch 1 mit einem in zwei stabförmige Einzellenker aufgelösten Querlenker, dadurch gekennzeichnet, daß der Federteller (11) an einem der Einzellenker schwenkbar angeordnet und die Koppelstrebe durch einen Dreieckslenker gebildet ist, der über ein Kugelgelenk mit dem Radträger (2) und über ein ecksteifes Drehlager mit dem Federteller (11) verbunden ist.

6. Radaufhängung nach Anspruch 5, dadurch gekennzeichnet, daß der als Koppelstrebe wirkende Dreieckslenker durch zwei Lenkerstangen gebildet wird, die jeweils gelenkig mit dem Federteller (11) bzw. mit dem Radträger (2) verbunden sind, wobei in Draufsicht der Abstand der Anlenkpunkte am Federteller (11) größer ist als am Radträger (2).

## Claims

1. A damper strut type vehicle wheel suspension, with a wheel support (2) bearing the wheel (1), which wheel support (2) is firmly connected with the lower end of a telescopic shock-absorber (3), the upper end of which is articulatedly supported on the vehicle structure (6), in addition with a transverse arm (8), which is swivellably connected on the structure side about an axis (9) running at least approximately longitudinally and is connected externally in an articulated manner with the wheel support (2), in which the vehicle structure (6) rests against the transverse arm (8) via a support spring (10) and a spring plate (11), which is swivellably supported on the transverse arm (8) about a rotation axis (12) running approximately in the longitudinal direction of the vehicle and by a coupling strut (15) running at a vertical distance from the transverse arm (8) and approximately in the transverse direction of the vehicle, characterised in that the said rotation axis (12) of the spring plate is staggered laterally in relation to the line of force (13) of the support spring (10) on the transverse arm and the spring plate (11) is supported by the coupling strut (15) on the wheel support (2) or on the shock- absorber (3).

2. A wheel suspension according to Claim 1, characterised in that the rotation axis (12) of the spring plate (11) is staggered with respect to the line of force (13) of the support spring (10) towards the centre of the vehicle and the coupling strut (15) runs above the transverse arm (8).

3. A wheel suspension according to Claim 1, characterised in that the rotation axis (12) of the spring plate (11) is staggered with respect to the line of force (13) of the support spring (10) to the exterior and the coupling strut (15) engages beneath the transverse arm (8) on the wheel support (2).

4. A wheel suspension according to Claim 1 for a steerable wheel, characterised in that the outer joint (17) of the coupling strut (15) is staggered with respect to the steering rotation axis (16) running through the outer transverse arm joint (7) and the upper supporting joint (5) of the shock absorber (3) towards the exterior of the vehicle.

5. A wheel suspension according to Claim 1 with a transverse arm broken down into two rod-shaped individual arms, characterised in that the spring plate (11) is swivellably arranged on one of the individual guides and the coupling strut is formed by a triangular arm, which is connected via a ball-and-socket joint with the wheel support (2) and via a pivot bearing, which is angularly rigid, with the spring plate (11).

6. A wheel suspension according to Claim 5, characterised in that the triangular arm, acting as coupling strut, is formed by two guide rods which are connected in each case articulatedly with the spring plate (11) or with the wheel support (2), in which in top view the distance between the articulation points on the spring plate (11) is greater than on the wheel support (2).

## Revendications

1. Suspension de roue, du type à amortisseur constituant jambe de suspension, dans laquelle :

- un porte-roue (2), sur lequel est montée la roue (1), est solidaire de l'extrémité inférieure d'un amortisseur télescopique (3) dont l'extrémité supérieure s'appuie par une articulation sur le châssis (6) du véhicule,

- un bras transversal (8) est articulé, du côté du châssis autour d'un axe (9) au moins sensiblement parallèle à l'axe longitudinal du véhicule et, vers l'extérieur, au porte-roue (2),

- le châssis (6) est en appui sur le bras transversal (8) par un ressort porteur (10) et une cuvette de ressort (11) pouvant basculer autour d'un axe (12) porté par le bras transversal (8) et orienté sensiblement selon la direction longitudinale du véhicule, cette cuvette étant en appui par l'intermédiaire d'une biellette d'accouplement (15) sensiblement transversale et espacée en hauteur par rapport au bras transversal (8) la suspension étant caractérisée en ce que l'axe de rotation (12) de la cuvette (11) est décalé latéralement par rapport à la ligne d'action (13) du ressort porteur (10), le long du bras transversal (8) tandis que la cuvette (11) s'appuie par la biellette d'accouplement (15) sur le porte-roue (2) ou sur l'amortisseur (3).

2. Suspension selon la revendication 1, caractérisée en ce que l'axe de rotation (12) de la cuvette (11) est décalé, par rapport à la ligne d'action (13) du ressort porteur (10), vers l'intérieur du véhicule et que la biellette d'accouplement (15) se trouve au-dessus du bras transversal (8).

3. Suspension selon la revendication 1, caractérisée en ce que l'axe de rotation (12) de la cuvette (11) est décalé, par rapport à la ligne d'action (13) du ressort porteur (10), vers l'extérieur et que la biellette d'accouplement (15) est en prise avec le porte-roue (2).

4. Suspension selon la revendication 1, destinée à une roue directrice, caractérisée en ce que l'articulation externe (17) de la biellette d'accouplement (15) est décalée vers le côté extérieur du véhicule, par rapport à l'axe de braquage (16) passant par l'articulation externe (7) du bras transversal et par l'articulation supérieure (5) de l'amortisseur (3).

5. Suspension selon la revendication 1, équipée d'un bras transversal décomposé en deux bras individuels en forme de tiges, caractérisée en ce que la cuvette de ressort (11) est articulée sur un des bras individuels tandis que la biellette d'accouplement est constituée par une gaine triangulaire de direction reliée par une articulation sphérique au porte-roue (2) et par un palier de rotation rigide à angle à la cuvette de ressort (11).

6. Suspension selon la revendication 5, caractérisée en ce que la barre triangulaire constituant la biellette d'accouplement est constitué de deux tiges articulées chacune à la cuvette (11) et au porte-roue, la distance en plan des points d'articulation sur la cuvette (11) étant supérieure à celle des points d'articulation sur le porte-roue (2).